# EUROPEAN PATENT SPECIFICATION

(11) **EP 2 045 178 B1**
(45) Date of publication and mention of the grant of the patent: **10.03.2010**
(21) Application number: 08017230.7
(22) Date of filing: 30.09.2008
(51) Int. Cl.: B62J 27/00, B62K 5/00

(54) **Small-sized motorized vehicle**
Kleines Kraftfahrzeug
Véhicule motorisé de petite taille

(30) Priority: 04.10.2007 JP 2007260709
(43) Date of publication of application: 08.04.2009
(73) Proprietor: HONDA MOTOR CO., LTD., Tokyo 107-8556 (JP)
(72) Inventor: Yamamura, Makoto, Wako-shi Saitama, 351-0193 (JP); Fukuzumi, Yasumi, Wako-shi Saitama, 351-0193 (JP)
(74) Representative: Prechtel, Jörg

(56) References cited:
- EP-A- 1 659 029
- WO-A-2006/041002
- JP-A- 2003 190 224
- US-B1- 6 731 202

## Description

The present invention relates to a small-sized motorized vehicle according to the preamble of claim 1 that is capable of traveling on sidewalks and used as a motorized wheel chair or other transportation means for the elderly or other people.

Such a vehicle is known from document EP 1 659 029 A1.

Some small-sized motorized vehicles are known to have turn indicators or reflectors on the sides of the vehicle in order to ensure that the sides of the vehicle are clearly viewable.

A small-sized motorized vehicle of this kind can travel only at 6 km/h (1.67 m/sec) at the maximum, and, when crossing a road, cannot by itself readily avoid an approaching nearby vehicle. It is therefore very important to improve the visibility of such a small-sized motorized vehicle. Specifically, a small-sized motorized vehicle used by the elderly or other people desirably has improved visibility particularly when it crosses a road.

To this end, there is a known small-sized motorized vehicle with a pole for improving the visibility of the vehicle, as disclosed in JP-A 2003-190224.

In the small-sized motorized vehicle disclosed in JP-A 2003-190224, an electric motor and a battery are mounted on a vehicle body frame to which wheels and a seat are attached, and the electric motor drives the wheels. The motorized vehicle is equipped with a pole unit at the rear of a seatback of the seat, the pole unit operated in response to key operation or manual switch operation and extendable vertically or in a direction substantially parallel to the seatback. Light emitting means is provided at the tip of a pole of the pole unit.

The light emitting means is a light emitting device capable of blinking, and power is fed from the battery to the light emitting means when the pole is extended. The pole unit is disposed near the left side of the seatback in the width direction of the vehicle.

In the small-sized motorized vehicle described above, however, since the pole unit is operated in response to key operation or manual switch operation, a vehicle occupant must operate the key or the manual switch. Specifically, if the vehicle occupant forgets or otherwise neglects the key or manual switch operation that extends the pole unit, the light emitting means may not blink. For example, turn indicators and other devices used when the vehicle turns or crosses a road have a similar problem caused when the vehicle occupant forgets or otherwise neglects to perform the relevant operation.

Further, in the small-sized motorized vehicle described above, since the pole unit is disposed near the left side of the seatback in the width direction of the vehicle, the visibility of the pole when viewed from the side where the pole is disposed differs from the visibility of the pole when viewed from the opposite side.

Since the function of a typical reflector is to be irradiated with light from headlights or other light sources of a nearby vehicle and to reflect the light, the reflector becomes less visible when viewed at a distance. For this reason, a reflector is less visible than an LED and other light-emitting members.

The object of the present invention is to provide a small-sized motorized vehicle having a alerting display capability in which the alerting is automatically displayed when the vehicle turns or crosses a road to alert pedestrians and nearby vehicles, and allow the pedestrians and nearby vehicles to more easily recognize the vehicle.

This problem is solved by a small-sized motorized vehicle according to claim 1.

The vehicle according to the invention travels as a result of power stored in the battery being supplied to the electric motor, and the drive force of the electric motor being transmitted to the wheels. For example, the small-sized motorized vehicle includes a navigation system and a vehicle orientation sensor, uses road information and positional information obtained from the GPS (global positioning system) as well as directional information (orientation) of the vehicle to judge the state of the vehicle when the vehicle turns or crosses a road, and then informs (alerts) the vehicle occupant and/or nearby vehicles that the vehicle is turning or crossing a road. Specifically, the small-sized motorized vehicle includes the crossing state determining means for detecting the state of the vehicle when the vehicle turns or crosses a road, and the alerting means for informing the vehicle occupant and/or nearby vehicles that the vehicle is turning or crossing a road, whereby the small-sized motorized vehicle can automatically activate the alerting means when the vehicle turns or crosses a road, and inform and alert pedestrians and nearby vehicles that the small-sized motorized vehicle (motorized wheel chair) is turning or crossing a road.

The warning means preferably changes a state of illumination of lights of the vehicle. The lights are formed from LEDs or other light-emitting members, whereby the visibility is improved, for example, as compared to reflectors that are irradiated with headlights or other light sources of nearby vehicles and reflect the light. As a result, pedestrians and nearby vehicles can more easily recognize the vehicle.

A preferred embodiment of the invention will be described below in detail with reference to the accompanying drawings, in which
FIG. 1 is a side view of a small-sized motorized vehicle according to the invention;
FIG. 2 is a plan view of the motorized vehicle shown in FIG. 1;
FIG. 3 is a front view of the motorized vehicle shown in FIG. 1;
FIG. 4 is a rear view of the motorized vehicle shown in FIG. 1;
FIG. 5 is a plan view of a steering handle and rear-view mirrors of the motorized vehicle shown in FIG. 1;
FIG. 6 is an electric block diagram of the small-sized motorized vehicle shown in FIG. 1;
FIG. 7 is a flowchart used in a controller shown in FIG. 6;
FIGS. 8A and 8B are graphs showing light blinking states;
FIGS. 9A to 9C show a difference in control according to the road on which the motorized vehicle shown in FIG. 1 travels; and
FIGS. 10A and 10B show a blinking state of the motorized vehicle shown in FIG. 1.

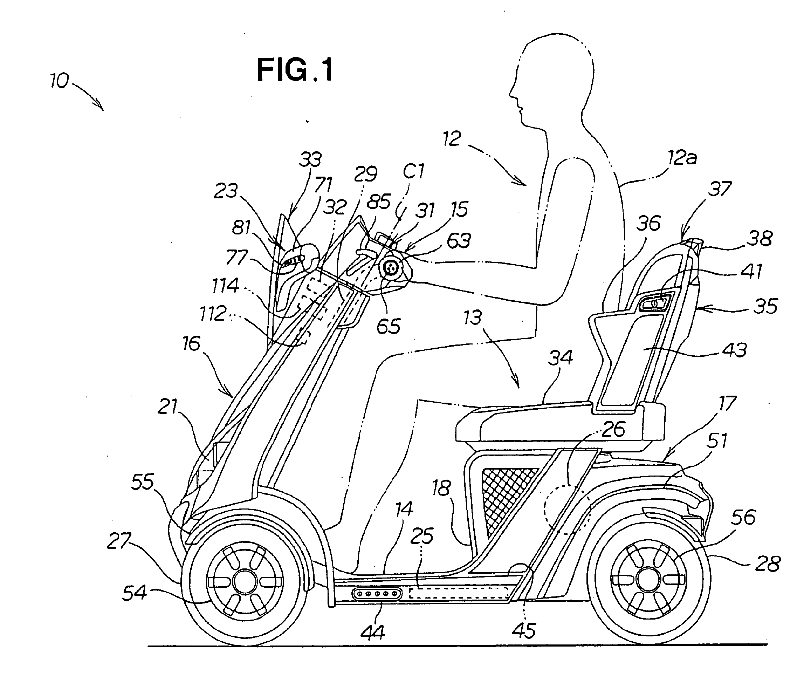

Referring now to FIGS. 1 to 4 inclusive, a small-sized motorized vehicle 10 includes a seat 13 on which a vehicle occupant 12 is seated; a floor step 14 on which the feet of the vehicle occupant 12 are placed; a steering handle 15 by which the passenger 12 steers the vehicle; a front cowl 16 that covers a front portion of a vehicle body; a rear cowl 17 that covers a rear portion of the vehicle body; side cowls 18, 18 that surround the portion under the seat 13 (only one of the side cowls is shown); headlights 21, 21 that are provided on the front side of the vehicle body and illuminate an area in front of the vehicle 10; left and right rear-view mirrors 23, 24 disposed above the front cowl 16 and used by the vehicle occupant 12 to look behind the vehicle; a battery 25 disposed in a lower portion of the floor step 14; an electric motor 26 that is disposed under the seat 13 and receives power from the battery 25; front wheels 27, 27 rotatably and steerably disposed in a front lower portion of the vehicle body; rear wheels 28, 28 rotatably disposed in a rear-lower portion of the vehicle body, and driven by the electric motor 26; a steering shaft 29 for steering the front wheels 27, 27, the upper end of the steering shaft 29 attached to the steering handle 15 and the lower end of the steering shaft 29 connected to the front wheels 27, 27; an operation panel 31 disposed in a central portion of the steering handle 15 and used to drive the vehicle; a navigation system 32 that is disposed in the front cowl 16 and uses the GPS (global positioning system)-based position detection capability; and a display 33 that is provided in an upper central portion of the front cowl 16 and displays driving information and navigation information.

Further, the small-sized motorized vehicle 10 can travel only at 6 km/h (1.67 m/sec) at the maximum and has a restricted vehicle body size smaller than 109 cm in height, 70 cm in width, and 120 cm in total length. Specifically, the small-sized motorized vehicle 10 is a motorized wheel chair used by the elderly or other people as transportation means. Therefore, the vehicle 10, when crossing a road, cannot by itself readily avoid an approaching nearby vehicle. It is therefore very important to improve the visibility of the vehicle 10.

The seat 13 is rotatably attached to the vehicle body to make it easier for the vehicle occupant to step on and out of the vehicle. The seat 13 includes a seat cushion 34 that supports the waist of the vehicle occupant 12 and a seatback 35 that supports the back 12a of the vehicle occupant 12.

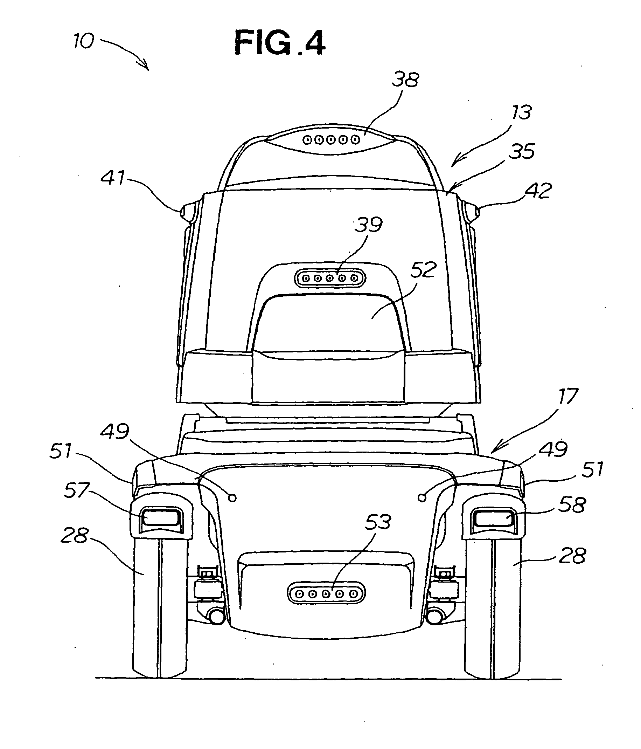

The seatback 35 includes stays 36, 36 that extend forward from the left and right sides and support the ribs of the vehicle occupant 12; illuminating means 37 that is provided at the front upper end of the seatback 35 and illuminates the back 12a of the vehicle occupant 12; a tail light 38 that is provided at the upper rear end of the seatback 35 and undergoes a change in lighting state when the vehicle turns or crosses a road; a seat rear lamp 39 (FIG. 4) that is provided on the rear of the seatback 35 and that illuminates concurrently when the headlights 21, 21 are illuminated; left and right side turn indicators 41, 42 provided on the sides of the seatback 35; and side reflectors 43, 43 that are provided on the left and right sides of the seatback 35 and reflect light from nearby vehicles and other objects (only one of the side reflectors is shown).

The tail light 38 is alerting means for informing pedestrians and nearby vehicles that the vehicle 10 is turning or crossing a road.

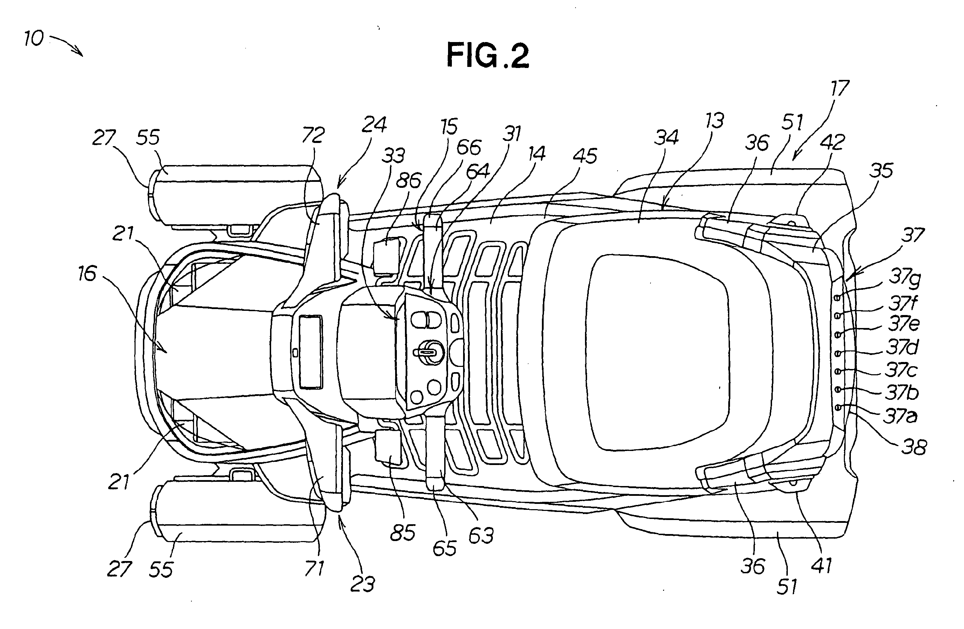

As shown in FIG. 2, the illuminating means 37 includes a plurality of light emitters 37a to 37g, and the light emitters 37a to 37g are disposed to illuminate the entire back 12a of the vehicle occupant 12.

The floor step 14 includes side lamps 44, 44 that are disposed on the left and right sides and that are illuminated concurrently when the headlights 21, 21 are illuminated (only one of the side lamps is shown) and a baggage space 45 provided under the seat 13 and surrounded by the side cowls 18, 18.

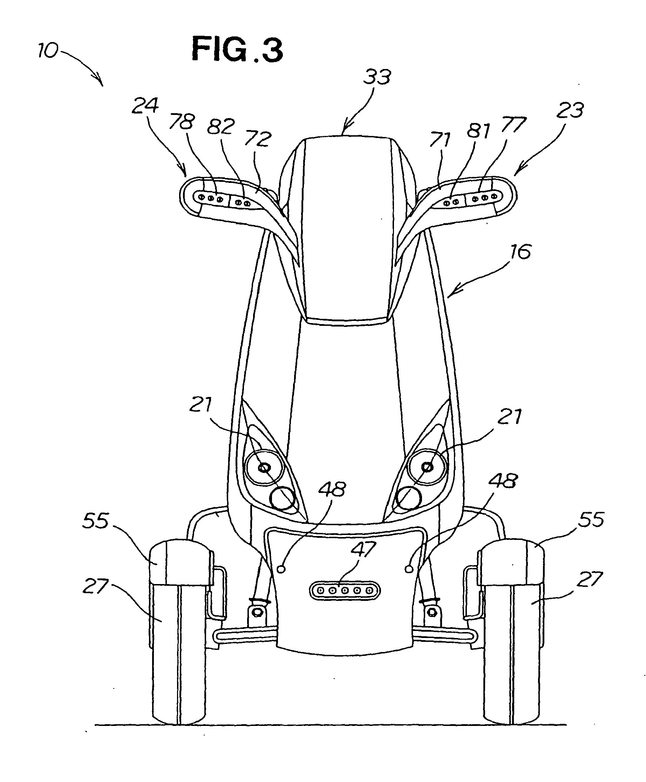

As shown in FIG. 3, the front cowl 16 includes a front lamp 47 that is illuminated concurrently when the headlights 21, 21 are illuminated and front sonar units 48, 48 that detect parked vehicles in front of the vehicle 10 and other obstacles. The front sonar units 48, 48 are obstacle detecting means for detecting obstacles that are in front of the vehicle and invisible to the vehicle occupant.

As shown in FIG. 4, the rear cowl 17 includes a rear lamp 53 that illuminates concurrently when the headlights 21, 21 are illuminated; rear sonar units 49, 49 that detect obstacles behind the vehicle; rear fenders 51, 51 that cover the portions above the rear wheels 28, 28; a rear reflector 52 that is provided behind the rear fenders 51, 51 and receives and reflects light from nearby vehicles and other objects; and left and right rear turn indicators 57, 58. The rear sonar units 49, 49 are obstacle detecting means for detecting obstacles behind the vehicle.

The front wheels 27, 27 are puncture-resistant tires, and include wheel caps 54, 54 with reflective labels that make the vehicle more visible to pedestrians and nearby vehicles (only one of the wheel caps is shown) and front fenders 55, 55 that can rotate when the steering handle 15 is steered to rotate the front wheels 27, 27.

Since the front fenders 55, 55 rotate along with the front wheels 27, 27, the vehicle occupant 12 can confirm the steering angle of the front wheels 27, 27 while the vehicle occupant 12 remains seated. The vehicle occupant 12 can thus check the motion of the vehicle when backing up the vehicle.

The rear wheels 28, 28 include wheel caps 56, 56 with reflective labels that make the vehicle more visible to pedestrians and nearby vehicles, and the rear fenders 51, 51 formed integrally with the rear cowl 17 cover the portions above the rear wheels 28, 28. The rear wheels 28, 28 are also puncture-resistant tires.

The steering shaft 29 is pivotably attached to the vehicle body with the portion of the steering shaft 29 on the steering handle 15 side inclined backward with respect to the vehicle body. Specifically, the center line C1 of the steering shaft 29 is inclined backward on the steering handle 15 side (upper end).

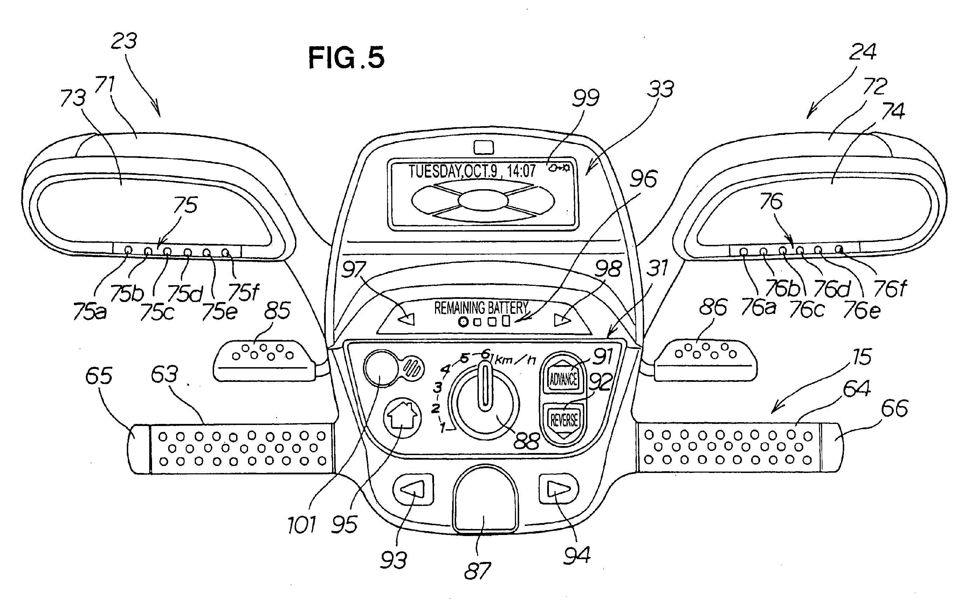

FIG. 5 shows the steering handle and the rear-view mirrors of the small-sized motorized vehicle shown in FIG. 1.

The steering handle 15 is a substantially horizontal bar-shaped handle, and includes left and right handle grips 63, 64 provided at the left and right sides of the bar-shaped handle, and handle-tip lights 65, 66 that are provided at the ends of the handle grips 63, 64 and undergo a change in lighting state when the vehicle is turning or crossing a road.

The handle-tip lights 65, 66 are alerting means for informing pedestrians and nearby vehicles that the vehicle 10 is turning or crossing a road.

The left and right rear-view mirrors 23, 24 are positioned in front of the handle grips 63, 64, as shown in FIGS. 2 and 5.

The left and right rear-view mirrors 23, 24 include left and right mirror housings 71, 72; left and right mirrors 73, 74 that are provided in the left and right mirror housings 71, 72 and show the situation behind the vehicle; left and right position indicator lamps 75, 76 having a plurality of light emitters 75a to 75f, 76a to 76f disposed substantially in the horizontal direction in lower portions of the left and right mirror housings 71, 72, the left and right position indicator lamps 75, 76 indicating the position of an obstacle behind the vehicle; left and right front turn indicators 77, 78 (FIG. 3) formed in the front surfaces of the left and right mirror housings 71, 72; and left and right mirror-housing lights 81, 82 (FIG. 3) that are formed in the front surfaces of the left and right mirror housings 71, 72 and undergo a change in lighting state when the vehicle is turning or crossing a road.

The left and right position indicator lamps 75, 76 are configured in such a way that when the vehicle is moving backward and the rear sonar units 49, 49 detect an obstacle behind the vehicle, the light emitters 75a to 75f, 76a to 76f undergo a change in lighting state in accordance with the position of the obstacle.

The left and right mirror-housing lights 81, 82 are alerting means for informing pedestrians and nearby vehicles that the vehicle 10 is turning or crossing a road.

The operation panel 31 includes left and right travelling levers 85, 86 provided in front of the handle grips 63, 64; a main switch 87 that turns on the battery 25; a traveling speed setting knob 88 that sets the traveling speed; an advancing button 91 and a reversing button 92 that switch the traveling mode between advancing and reversing; left and right turn indicator buttons 93, 94 that turn on the left and right front turn indicators 77, 78, the left and right side turn indicators 41, 42, and the left and right rear turn indicators 57, 58; a navigation button 95 that activates and deactivates the navigation system 32; and an emergency call button 101 used to request assistance in the event of an emergency.

The left and right travelling levers 85, 86, when either of which is operated, perform the same function and reduces the speed of the vehicle when gripped hardly.

The traveling speed setting knob 88 can set the speed from 1 to 6 km/h in a stepless manner. At a speed of 4 km/h or higher, steering the steering handle 15 causes automatic deceleration.

The display 33 includes a remaining battery display 96 for indicating the level of charge left in the battery; left and right turn indicator display 97, 98 that display whether the left and right front turn indicators 77, 78, the left and right side turn indicators 41, 42, and the left and right rear turn indicators 57, 58 are illuminated or blinking; and a liquid crystal panel 99 that displays driving information and navigation information.

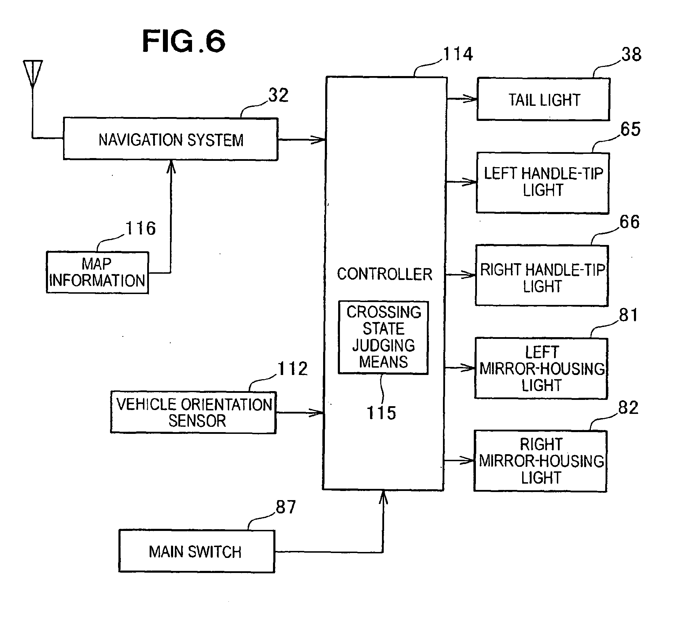

FIG. 6 is an electric block diagram of the small-sized motorized vehicle shown in FIG. 1.

As shown in FIG. 6, in the small-sized motorized vehicle 10 (FIG. 1), information obtained from the navigation system 32 described above, information obtained from a vehicle orientation sensor 112 that detects the orientation of the vehicle, and the state of the main switch 87 described above are inputted to a controller 114.

The controller 114 controls the lighting states of the tail light 38 on the seat 13 (FIG. 1), the handle-tip lights 65, 55 on the handle 15, and the mirror-housing lights 81, 82 on the rear-view mirrors 23, 24.

Map information 116 is inputted to the navigation system 32.

That is, the controller 114 receives inputs of information obtained from the navigation system 32, information obtained from the vehicle orientation sensor 112, and information obtained from the main switch 87, and uses the inputted information to control the blinking states of the tail light 38, the handle-tip lights 65, 66, and the mirror-housing lights 81, 82, all of which are alerting means. The controller 114 includes crossing state determining means 115 for judging the state in which the vehicle crosses a road. The state in which the vehicle crosses a road collectively means actions of the vehicle, such as turning and crossing an intersection, as will be described below.

The crossing state determining means 115 uses the navigation system 32 to ascertain conditions of a road and uses the vehicle orientation sensor 112 to detect the angle (orientation) to the road so as to judge, e.g., whether the vehicle traveling on a road with no sidewalk is positioned with respect to the road at an angle larger than a predetermined angle, whether the vehicle traveling on a road with a sidewalk is positioned with respect to the road at an angle larger than a predetermined angle, or whether the vehicle is crossing an intersection.

When the crossing state determining means 115 makes a judgment and selects one of the above situations, the controller 114 changes the blinking states of the tail light 38, the handle-tip lights 65, 66, and the mirror-housing lights 81, 82, all of which are alerting means.

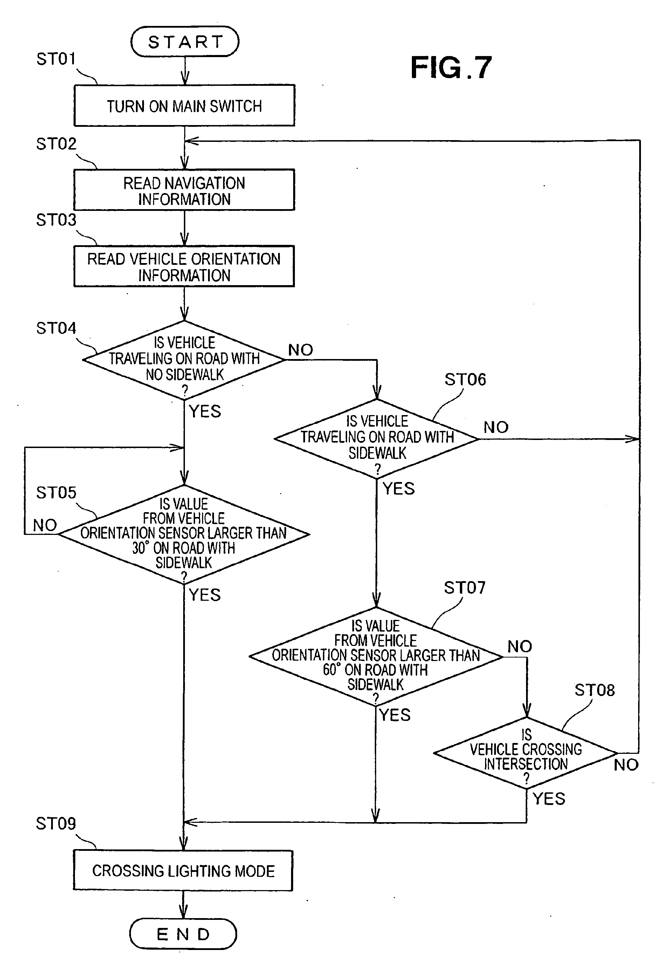

The operation of the crossing state determining means 115 in the controller 114 will now be described with reference to the flowchart shown in FIG. 7.

Step (hereinafter abbreviated to ST) 01: Turn on the main switch 87. At the same time, turn on the headlights 21,21, the tail light 38, and other lights at night.

ST02: Read navigation information.

ST03: Read vehicle orientation information.

ST04: Determine, based on the navigation information, whether or not the vehicle is traveling on a road with no sidewalk. When the vehicle is determined to be traveling on a road with no sidewalk, the control proceeds to ST05, whereas when the vehicle is not determined to be traveling on a road with no sidewalk, the control proceeds to ST06.

ST05: When the vehicle is traveling on a road with no sidewalk, a judgment is made as to whether or not the orientation angle with respect to the road detected by the vehicle orientation sensor 112 is larger than 30°. On a road with no sidewalk, it is conceivable that the vehicle 10, even with a slight change in orientation, comes into contact with pedestrians or nearby vehicles. When the orientation angle of the vehicle is larger than 30°, the control proceeds to ST09 and a crossing lighting mode is set in order to alert nearby vehicles and other subjects. In the crossing lighting mode, the tail light 38, the handle-tip lights 65, 66, and the mirror-housing lights 81, 82 are set to a blinking state and inform nearby vehicles that the vehicle 10 is crossing the road. When the orientation angle of the vehicle is smaller than 30°, the value is considered to be within the range of error in the operation of the steering handle 15 even when the vehicle is traveling straight. It is therefore judged that the vehicle occupant intends to travel straight, and the crossing lighting mode is not set. Specifically, it is monitored in S05 whether or not the orientation angle of the vehicle becomes larger than 30°.

ST06: Determine, based on the navigation information, whether or not the vehicle is traveling on a road with a sidewalk. When the vehicle is determined to be traveling on a road with a sidewalk, the control proceeds to ST07, whereas when the vehicle is not determined to be traveling on a road with a sidewalk, the control returns to ST02.

ST07: When the vehicle is traveling on a road with a sidewalk, a judgment is made whether or not the orientation angle to the road detected by the vehicle orientation sensor 112 is larger than 60°. When the vehicle is traveling on a road with a sidewalk, it takes time for the vehicle to turn and go off the sidewalk into the driving lane. However, when the orientation angle of the vehicle is larger than 60°, the vehicle may quickly go off the sidewalk. In this case, the control proceeds to ST09, where the crossing lighting mode is set. When the orientation angle of the vehicle is smaller than 60°, the control proceeds to ST08.

ST08: Determine, using the navigation system 32, whether or not the vehicle is traveling across an intersection. When it is judged that the vehicle is crossing an intersection, the control proceeds to ST09, where the crossing lighting mode is set. When a determination of NO is given, the control returns to ST02.

ST09: The crossing lighting mode is set.

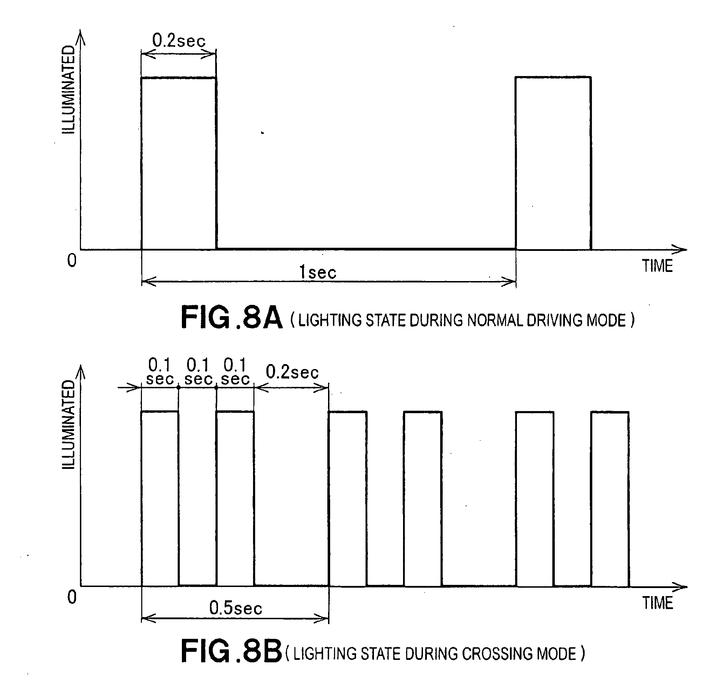

FIGS. 8A and 8B are graphs showing examples of light blinking states. The horizontal axis represents time, and the vertical axis represents ON-OFF of the light.

FIG. 8A shows the lighting state during a normal traveling mode. In daylight driving, the vehicle travels with the tail light 38 turned off and the handle-tip lights 65, 66 and the mirror-housing lights 81, 82 blinking, repeating an on and off cycle, at 5-second intervals. Specifically, the lamps are repeatedly turned on for 0.2 second every second.

In night driving, the vehicle travels with the tail light 38 turned on and the handle-tip lights 65, 66 and the mirror-housing lights 81, 82 blinking, repeating an on and off cycle, at 5-second intervals. Specifically, the lamps are repeatedly are turned on for 0.2 second every second.

FIG. 8B shows the lighting state in the crossing lighting mode. In daylight as well as night driving, the tail light 38, the handle-tip lights 65, 66, and the mirror-housing lights 81, 82 undergo a change in state to a blinking state in which the lamps are repeatedly turned on for 0.1 second, turned off for 0.1 second, turned on for 0.1 second, and turned off for 0.2 second every 0.5 second, by which pedestrians and nearby vehicles are alerted that the small-sized motorized vehicle 10 is traveling.

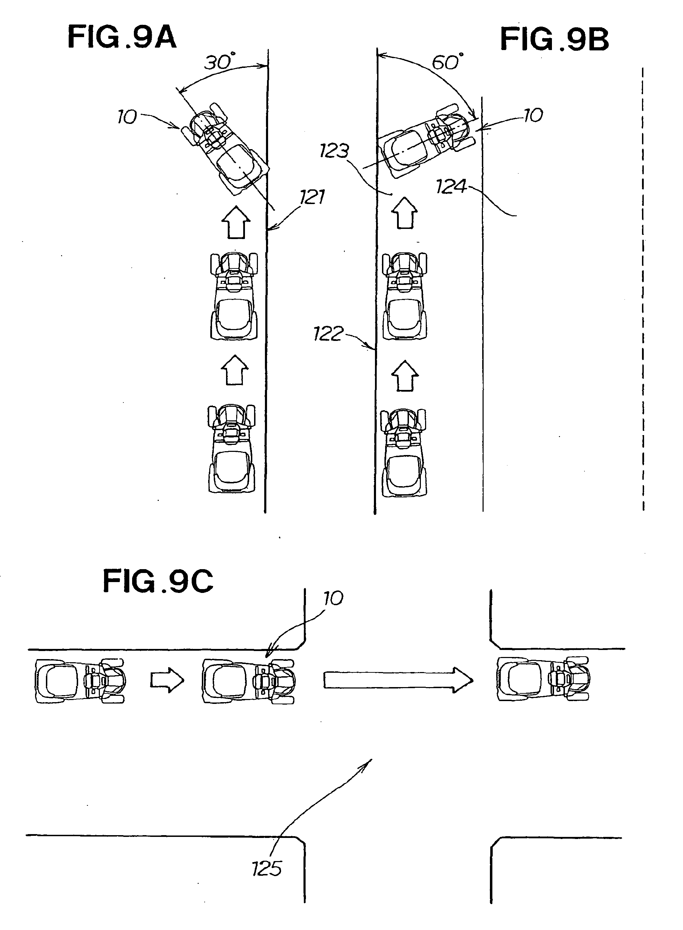

FIGS. 9A to 9C show difference in control according to a road on which the small-sized motorized vehicle travels. In the following description, the small-sized motorized vehicle 10 is simply referred to as "vehicle 10" or "vehicle in question 10."

FIG. 9A shows a state in which the vehicle 10 is traveling on a road 121 with no sidewalk. On the road 121 with no sidewalk, it is conceivable that the vehicle in question 10, even when undergoing a slight change in orientation, comes into contact with pedestrians or nearby vehicles. Therefore, when the vehicle orientation sensor 112 (see FIG. 6) detects that the angle with respect to the road is larger than 30°, the crossing lighting mode is set.

FIG. 9B shows the vehicle 10 traveling on a road 122 with a sidewalk. A long time is required for the vehicle in question 10 to turn and go off a sidewalk 123 into a driving lane 124. Therefore, when the vehicle orientation sensor 112 (see FIG. 6) detects that the angle with respect to the road is larger than 60°, the crossing lighting mode is set.

In FIG. 9C, when the vehicle 10 is traveling across an intersection 125, the crossing lighting mode is also set. This is because the vehicle 10, when crossing a road, cannot by itself readily avoid an approaching nearby vehicle, and the visibility of the vehicle 10 needs to be improved.

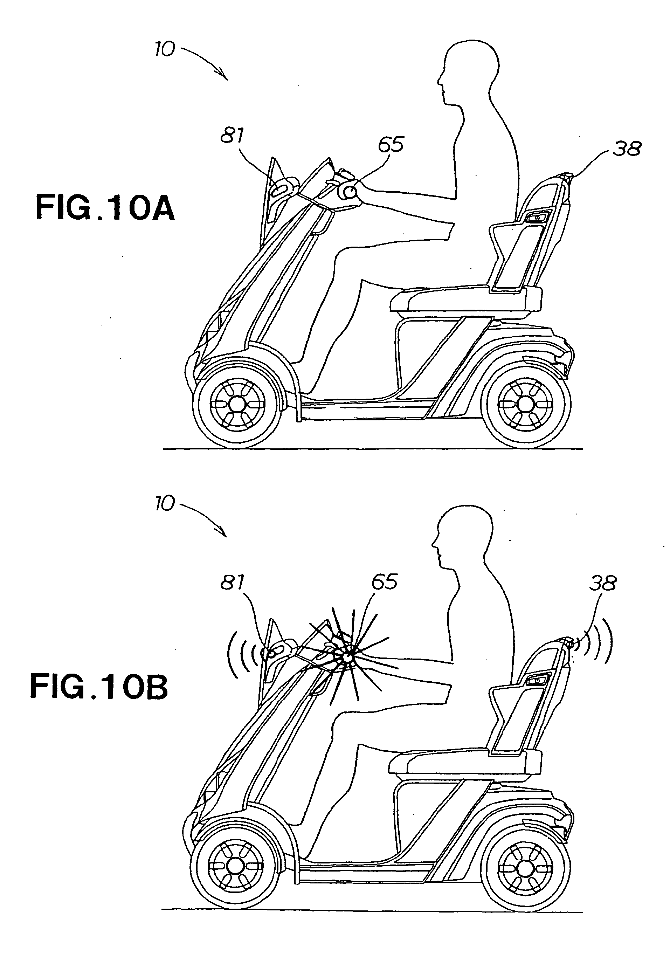

FIGS. 10A and 10B show the illuminated and blinking states of the small-sized motorized vehicle.

FIG. 10A shows the lighting states of lights during a normal traveling mode. In daylight driving, the vehicle travels with the tail light 38 turned off and the handle-tip lights 65, 66 (FIG. 3) and the mirror-housing lights 81, 82 in a blinking state. In night driving, the vehicle travels with the tail light 38 turned on and the handle-tip lights 65, 66 and the mirror-housing lights 81, 82 in a slowly blinking state, as shown in FIG. 8A.

FIG. 10B shows the lighting state in the crossing lighting mode. Both in the daylight and night driving, the tail light 38, the handle-tip lights 65, 66 (see FIG. 3), and the mirror-housing lights 81, 82 change states to ones in which the lamps quickly blink, as shown in FIG. 8B.

As shown in FIG. 1, the small-sized motorized vehicle 10 travels by supplying power stored in the battery 25 to the electric motor 26 and transmitting the drive force of the electric motor 26 to the wheels. For example, the small-sized motorized vehicle 10 includes the navigation system 32 and the vehicle orientation sensor 112, uses not only road information and positional information obtained from the GPS but also the traveling direction (orientation angle) of the vehicle 10 to judge the state of the vehicle when turning or crossing a road, and then alerts the vehicle occupant 12 and/or nearby vehicles that the vehicle 10 is turning or crossing a road.

Specifically, the small-sized motorized vehicle 10 includes the crossing state determining means for detecting the state of the vehicle 10 when turning or crossing a road, and the alerting means 38, 65, 66, 81, and 82 that inform the vehicle occupant 12 and/or nearby vehicles that the vehicle 10 is turning or crossing a road, whereby the small-sized motorized vehicle 10 can automatically activate the alerting means 38, 65, 66, 81, and 82 when the vehicle 10 turns or crosses a road, and inform and alert pedestrians and nearby vehicles that the small-sized motorized vehicle 10 is turning or crossing a road.

The alerting means 38, 65, 66, 81, and 82 also allow the vehicle occupant 12 to recognize that the vehicle occupant 12 himself/herself is also turning or crossing a road.

Since the tail light 38, the handle-tip lights 65, 66, and the mirror-housing lights 81, 82, all of which are alerting means, change the lighting states of lights of the vehicle 10, and the lights are formed of LEDs or other light-emitting members, the visibility is improved, for example, as compared to reflectors that are irradiated by headlights or other light sources of nearby vehicles and reflect the light. As a result, pedestrians and nearby vehicles can more easily recognize the vehicle 10.

The present embodiment has been described with reference to a case where the navigation system 32 is disposed in the front cowl 16, as shown in FIG. 1, but the navigation system 32 can be disposed at any desired location. The navigation system may use navigation information obtained from a mobile telephone or other apparatus. Map information (mapping) may be provided independently to the small-sized motorized vehicle.

The small-sized motorized vehicle in the present embodiment has been described with reference to the case where the drive force of the electric motor 26 is transmitted to the rear wheels 28, 28 for traveling, but the drive force may be transmitted to the front wheels for traveling.

The small-sized motorized vehicle according to the invention is preferably used as a motorized wheelchair used by elderly or other persons.

A small-sized motorized vehicle that travels by a drive force of an electric motor. The motorized vehicle includes crossing state determining means (115) and alerting means (38, 65, 66, 81, 82). The crossing state determining means uses road information and vehicle positional information obtained from a GPS-based navigation system (32) as well as orientation angle information on the vehicle to determine a state of the vehicle when turning or crossing a road. The alerting means alerts nearby vehicles and other subjects that the vehicle is crossing a road or turning.

## Claims

1. A small-sized motorized vehicle wherein power is supplied from a battery (25) to an electric motor (26), a drive force of the electric motor is transmitted to wheels (27, 28), and the vehicle travels; the vehicle comprising:
a controller (114) including crossing state determining means (115) for determining a state of the vehicle when turning or crossing a road based on information provided by a navigation system (32) and a vehicle orientation sensor (112); and
alerting means (38, 65, 66, 81, 82) for informing a vehicle occupant and nearby vehicles that the vehicle is turning or crossing a road (121, 122),
**characterized in that,** the crossing state determining means (115) is adapted to judge whether the vehicle is travelling on a road (121) or on a side walk (123) of a road (122), and to judge whether the vehicle is positioned with respect to the road (121, 122) at an angle larger than a predetermined angle.

2. The vehicle according to claim 1, wherein the crossing state determining means (115) is further adapted to judge whether the vehicle is crossing an intersection (125).

3. The vehicle according to claim 1 or 2, wherein the alerting means is adapted to change lighting states of lights (38, 65, 66, 81, 82) of the vehicle when it is turning or crossing the road (121, 122).

## Patentansprüche

1. Motorisiertes Kleinfahrzeug, worin Strom von einer Batterie (25) einem Elektromotor (26) zugeführt wird, eine Antriebskraft des Elektromotors auf Räder (27, 28) übertragen wird und das Fahrzeug fährt;
wobei das Fahrzeug umfasst:
einen Controller (114), der ein Kreuzungszustand-Bestimmungsmittel (115) enthält, um einen Zustand des Fahrzeugs zu bestimmen, wenn es abbiegt oder eine Straße kreuzt, basierend auf Information, die von einem Navigationssystem (32) und einem Fahrzeugorientierungssensor (112) geliefert wird; und
ein Warnmittel (38, 65, 66, 81, 82) zum Informieren eines Fahrzeuginsassen und benachbarter Fahrzeuge, dass das Fahrzeug abbiegt oder eine Straße (121, 122) kreuzt,
**dadurch gekennzeichnet, dass** das Kreuzungszustand-Bestimmungsmittel dazu ausgelegt ist, zu bewerten, ob das Fahrzeug auf einer Straße (121) oder einem Gehweg (123) einer Straße (122) fährt, und zu bewerten, ob das Fahrzeug im Bezug auf die Straße (121, 122) mit einem Winkel angeordnet ist, der größer als ein vorbestimmter Winkel ist.

2. Das Fahrzeug gemäß Anspruch 1, worin das Kreuzungszustand-Bestimmungsmittel (115) ferner dazu ausgelegt ist, zu bewerten, ob das Fahrzeug eine Kreuzung (125) kreuzt.

3. Das Fahrzeug gemäß Anspruch 1 oder 2, worin das Warnmittel dazu ausgelegt ist, Beleuchtungszustände von Leuchten (38, 65, 66, 81, 82) des Fahrzeugs zu ändern, wenn es abbiegt oder die Straße (121, 122) kreuzt.

## Revendications

1. Véhicule motorisé de petite taille dans lequel la puissance est fournie par une batterie (25) à un moteur électrique (26), une force d'entraînement du moteur électrique est transmise aux roues (27, 28), et le véhicule se déplace ; le véhicule comprenant :
un contrôleur (114) comprenant des moyens de détermination d'état de traversée (115) pour déterminer un état du véhicule dans lequel il prend un virage ou traverse une route en fonction de l'information fournie par un système de navigation (32) et un capteur d'orientation de véhicule (112) ; et
des moyens d'alerte (38, 65, 66, 81, 82) pour informer un occupant du véhicule et les véhicules à proximité que le véhicule est en train de tourner ou traverser une route (121, 122),
**caractérisé en ce que,** les moyens de détermination d'état de traversée (115) sont adaptés pour juger si le véhicule se déplace sur une route (121) ou sur un trottoir (123) d'une route (122) et pour juger si le véhicule est positionné par rapport à la route (121, 122) selon un angle plus grand qu'un angle prédéterminé.

2. Véhicule selon la revendication 1, dans lequel les moyens de détermination d'état de traversée (115) sont en outre adaptés pour juger si le véhicule traverse une intersection (125).

3. Véhicule selon la revendication 1 ou 2, dans lequel les moyens d'alerte sont adaptés pour changer l'état d'éclairage des feux (38, 65, 66, 81, 82) du véhicule lorsqu'il tourne ou qu'il traverse la route (121, 122).
